# FASCICULE DE BREVET EUROPEEN

(11) **EP 1 455 120 B1**
(45) Date de publication et mention de la délivrance du brevet: **22.02.2006**
(21) Numéro de dépôt: 04300124.7
(22) Date de dépôt: 05.03.2004
(51) Int. Cl.: F16H 63/20, F16H 63/36

(54) **Dispositif d'actionnement d'une boîte de vitesses pilotée**
Betätigungsvorrichtung eines automatisierten Getriebes
Actuation device of an automated gearbox

(30) Priorité: 06.03.2003 FR 0302737
(43) Date de publication de la demande: 08.09.2004
(73) Titulaire: Peugeot Citroen Automobiles S.A., 78140 Vélizy Villacoublay (FR)
(72) Inventeur: Delporte, Stéphane, 91190 Saint Aubin (FR)
(74) Mandataire: De Cuenca, Emmanuel Jaime

(56) Documents cités:
- EP-A- 0 737 827
- DE-C- 10 011 272
- US-A- 5 060 538
- PATENT ABSTRACTS OF JAPAN vol. 008, no. 061 (M-284), 23 mars 1984 (1984-03-23) & JP 58 211064 A (HINO JIDOSHA KOGYO KK), 8 décembre 1983 (1983-12-08)
- PATENT ABSTRACTS OF JAPAN vol. 007, no. 249 (P-234), 5 novembre 1983 (1983-11-05) & JP 58 132819 A (FUJI JUKOGYO KK), 8 août 1983 (1983-08-08)

## Description

La présente invention concerne une commande interne de boîte de vitesses pilotée.

Elle se rapporte plus particulièrement à une commande de vitesses dans laquelle, pour déplacer alternativement plusieurs éléments juxtaposés d'engagement de rapports, un axe de commande porte au moins un doigt de passage et une pièce dite clé d'interverrouillage destinée à immobiliser les autres éléments d'engagement lors du passage d'un rapport de vitesses. Le document EP-A-0 737 827 montre une commande interne comportant toutes les caractéristiques du préambule de la revendication 1.

Les dispositifs de commandes internes de boîte de vitesses, de l'état de la technique, donnent satisfaction. Cependant dans le cas d'une application à des boîtes de vitesses pilotées, il est nécessaire d'avoir des éléments d'engagement, c'est-à-dire des fourchettes, présentant une longueur optimisée car une longueur inadaptée et notamment trop longue présente l'inconvénient d'une grande flexibilité et entraîne en conséquence un mauvais passage de rapports. Il faut également que l'engagement du passage s'effectue avec précision afin d'assurer un passage de vitesse rapide.

Le but de l'invention est de proposer une commande interne de boîte de vitesses pilotée qui permet d'assurer une précision des passages et une rapidité dans le temps de passage d'un rapport à l'autre.

A cet effet, la présente invention a pour objet une commande interne d'une boîte de vitesses pilotée pour déplacer alternativement plusieurs éléments d'engagement de rapports juxtaposés, dans un carter de la boîte de vitesses, comportant un axe de commande propre à tourner, sous l'action d'un actionneur dans des paliers agencés sur une platine support, cet axe de commande porte au moins un doigt de passage pour l'engagement d'un élément et une pièce dite clé d'interverrouillage destinée à immobiliser les autres éléments d'engagement lors du passage d'un rapport de vitesses, caractérisée en ce que l'axe de commande porte également au moins une glissière de sélection comportant au moins un pion de sélection de telle sorte qu'il est propre à être d'abord engagé sélectivement, par translation de la glissière longitudinalement sur l'axe de commande, dans l'une des ouvertures agencées chacune dans l'un des doigts de passage associé à un élément d'engagement, puis à entraîner ledit doigt de passage ainsi sélectionné, par rotation de l'axe, de manière à réaliser l'engagement d'un rapport, tandis que la clé d'interverrouillage constituée d'au moins une réglette dite de verrouillage, guidée en translation sur le support de l'axe de commande et solidaire de la glissière coopère, concomitamment lors des déplacements de cette dernière, avec un plot agencé sur chacun des doigts de passage de manière à immobiliser en rotation les doigts de passage non sélectionnés et par voie de conséquence les autres éléments d'engagement.

Suivant quelques dispositions intéressantes de l'invention :
- la commande est pourvue de deux glissières de sélection, désignées première et deuxième glissière, portées par l'axe de commande et propres à translater respectivement de manière sélective, par un actionneur, sur l'axe de commande,
- chacun des doigts de passage est engagé dans l'un des éléments d'engagement et est pourvu d'une bague de guidage montée libre en rotation sur l'axe de commande, les bagues étant juxtaposées les unes aux autres et chaque bague présente une rainure transversale afin d'assurer la mise en coopération, lors des déplacements de la ou des glissière(s) de sélection d'un pion de sélection avec une nervure saillant de la rainure,
- chacune des glissières comporte au moins un pion agencé de manière qu'un doigt de passage est apte à être sélectionné par un pion de la première glissière alors qu'un doigt de passage adjacent est apte à être sélectionné par un pion porté par la deuxième glissière, préférentiellement chacune des glissières est pourvue de deux pions,
- la clé d'interverrouillage est constituée de deux réglettes guidées en translation sur les paliers du support de l'axe, chaque réglette étant associée de manière symétrique à la glissière de sélection lui correspondant avec les mêmes doigts de passage et étant pourvue, pour chacun de ces doigts, d'une ouverture présentant une ligne de guidage longitudinale qui est prolongée à l'une de ses extrémités de part et d'autre d'une ligne de guidage transversale, à l'intérieur de laquelle est apte à se déplacer un plot saillant de la bague de guidage du doigt correspondant,
- chacune des réglettes est en outre pourvue d'un moyen d'obturation des lignes de guidage de l'autre réglette afin d'assurer une loi d'autorisation ou d'interdiction des déplacements des plots en fonction du rapport sélectionné et une butée dans la ligne de guidage transversale lors du dégagement d'un rapport,
- ce moyen d'obturation est constitué d'au moins une barrière saillant de la réglette et coopérant avec la surface extérieure de l'autre réglette.

Un autre objet de la présente invention concerne une boîte de vitesses du type pilotée, notamment pour véhicule automobile, comportant une commande interne de vitesses conforme à l'une quelconque des caractéristiques décrites ci-dessus.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue d'ensemble en perspective de la commande interne de boîte de vitesses pilotée selon la présente invention,
- la figure 2 est une vue de détail à plus grande échelle des moyens de sélection de la commande interne montés sur une platine de support,
- la figure 3 est une vue de détail à plus grande échelle des doigts de passage montés libres en rotation sur l'arbre de passage des rapports,
- la figure 4 est une vue de détail à plus grande échelle de la clé d'interverrouillage de la commande interne selon l'invention, représentée dans une position de sélection d'un rapport de première ou deuxième vitesse, et
- la figure 5 est une vue similaire à la figure 4, illustrant la clé d'interverrouillage représentée dans une position de rapport au point mort.

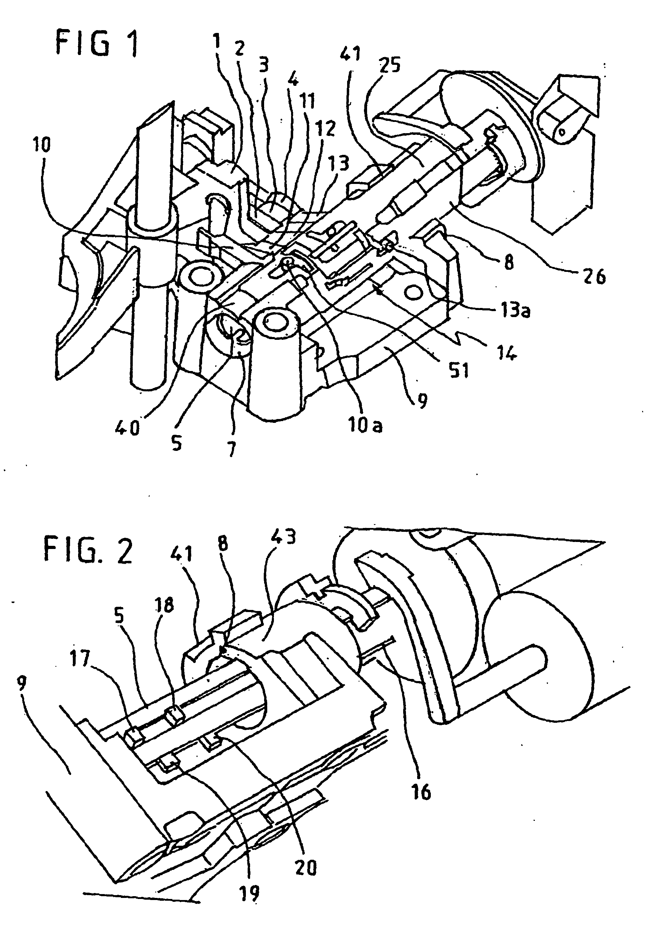

On a représenté sur les figures 1 à 5, un mode de réalisation d'une commande interne d'une boîte de vitesses pilotée selon la présente invention pour déplacer alternativement plusieurs éléments d'engagement de rapports 1 à 4 juxtaposés, dans un carter (non représenté) de la boîte de vitesses, un axe de commande 5 propre à tourner, sous l'action d'un actionneur extérieur non représenté, dans des paliers 7, 8 agencés de manière solidaire à une platine support 9 fixée sur l'une des parois du carter.

L'axe de commande 5 porte classiquement au moins un doigt de passage 10 à 13 pour l'engagement d'un élément et une pièce dite clé d'interverrouillage 14 destinée à immobiliser les autres éléments d'engagement lors du passage d'un rapport de vitesses.

Selon la présente invention, l'axe de commande 5 porte également au moins une glissière 15, 16 de sélection comportant au moins un pion de sélection 17 à 20 de telle sorte qu'il est propre à être d'abord engagé sélectivement, par translation de la glissière 15, 16 longitudinalement sur l'axe de commande 5, dans l'une des ouvertures 21 à 24 agencées chacune dans l'un des doigts de passage 10 à 13 associé à un élément d'engagement 1 à 4, puis à entraîner le doigt de passage ainsi sélectionné, par rotation de l'axe 5, de manière à réaliser l'engagement d'un rapport, tandis que la clé d'interverrouillage 14 constituée d'au moins une réglette 25, 26 dite de verrouillage, guidée en translation sur le support 9 de l'axe de commande 5 et solidaire de la glissière 15, 16 coopère, concomitamment lors des déplacements de cette dernière, avec un plot 10a à 13a agencé sur chacun des doigts de passage 10 à 13 de manière à immobiliser en rotation les doigts de passage non sélectionnés et par voie de conséquence les autres éléments d'engagement.

On a représenté sur les figures 1 à 5, une commande interne d'une boîte de vitesses à six rapports avant et un rapport de marche arrière.

A titre d'exemple, les doigts de passage 10 à 13 commandent respectivement selon le sens de rotation de l'axe de commande 5, respectivement le rapport de 1^{er} ou 2^{ème}, 3^{ème} ou 4^{ème}, 5^{ème} ou 6^{ème} et le rapport de la marche arrière.

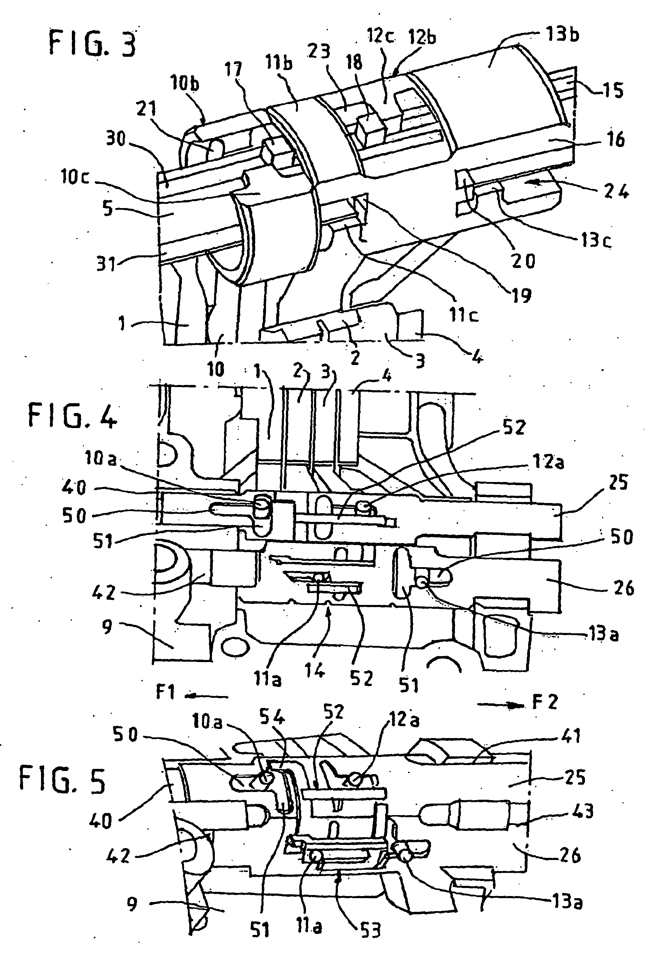

Ainsi, comme visible sur la figure 3, la commande interne est pourvue selon ce mode de réalisation représenté à titre non limitatif, de deux glissières, désignées première 15 et deuxième 16 glissière de sélection, portées par l'axe de commande 5 et propres à translater respectivement de manière sélective par un actionneur. Chacune de ces glissières 15, 16 est agencée de manière coulissante dans un rail 30, 31, par exemple, usiné sur l'axe de commande 5 permettant avantageusement de les lier en rotation sans perturber le guidage de cet axe de commande 5 dans les paliers de guidage 7 et 8 solidaire de la platine 9.

Par ailleurs, chacune des glissières 15, 16 est pourvue de deux pions de sélection 17, 18 et 19, 20 respectivement un pour chaque doigt de passage. Chacun de ces doigts de passage 10 à 13 est pourvu d'une bague de guidage 10b à 13b montée libre en rotation sur l'axe de commande 5 et juxtaposée les unes aux autres. Chaque bague présente une rainure transversale 21 à 24 afin d'assurer la mise en coopération, lors des déplacements de la glissière de sélection 15 ou 16 d'un pion de sélection 17 à 20 avec une nervure 10c à 13c saillant de ladite rainure, comme illustré sur la figure 3.

Chaque doigt 10 à 13 est en outre engagé dans l'un des quatre éléments 1 à 4 également désignés par le terme de « crosses » solidaires d'une fourchette propre à déplacer un pignon ou un crabot (non représenté) pour réaliser l'engagement ou le dégagement de l'un des rapports de la boîte de vitesses.

Comme illustré sur la figure 3, les glissières de sélection 15, 16 sont agencées sur l'axe de commande de manière sensiblement perpendiculaire et tel qu'un doigt de passage est apte à être sélectionné par un des pions 17 à 20 de la première glissière alors qu'un doigt de passage adjacent est apte à être sélectionné uniquement par un pion 17 à 20 porté par la deuxième glissière, permettant avantageusement une sélection double assurant une réduction du temps de passage d'un rapport à l'autre, principalement lorsque le changement de rapport concerne deux fourchettes différentes, donc deux crosses différentes.

Pour ce faire, on comprend que les rainures 21 à 24 des bagues de guidage des doigts de passage sont agencées en concordance avec leurs pions 17 à 20 respectifs.

Du côté opposé aux rainures 21 à 24 des bagues de guidage des doigts, est agencée une clé d'interverrouillage 14, comme visible sur les figures 1, 4 et 5, destinée à assurer l'immobilisation en rotation des doigts non sélectionnés.

Cette clé d'interverrouillage 14 est constituée de deux réglettes 25, 26 guidées en translation dans un rail 40 à 43 réalisé sur les paliers 7 et 8 du support 9 de l'axe 5 et liées chacune à une glissière de sélection 15, 16. Chacune des réglettes 25 à 26 coopère avec un plot 10a à 13a agencé sur chacune des bagues de guidage 10b à 13b des doigts de passage de manière à immobiliser en rotation ces derniers et par voie de conséquence les autres éléments d'engagement.

A cet effet, chaque réglette 25, 26 est associée de manière symétrique à la glissière de sélection 15 ou 16 lui correspondant avec la même paire de doigts de passage et est pourvue, pour chacun de ces doigts, d'une ouverture 21 à 24 présentant une ligne de guidage longitudinale 50 qui est prolongée à l'une de ses extrémités de part et d'autre d'une ligne de guidage transversale 51, à l'intérieur de laquelle est apte à se déplacer un plot saillant de la bague de guidage du doigt correspondant.

Chacune des réglettes 25, 26 comporte en outre un moyen d'obturation 52, 53 d'au moins une ligne de guidage de l'autre réglette afin d'assurer une loi d'autorisation ou d'interdiction de certains déplacements des plots en fonction du rapport sélectionné.

Ce moyen d'obturation 52, 53 est constitué, par exemple, d'au moins une barrière saillant de la réglette et coopérant avec la surface extérieure de l'autre réglette.

On comprend qu'un tel jeu de barrières, suivant les positions relatives des deux réglettes, va assurer une autorisation ou une interdiction d'effectuer une rotation du doigt de passage.

Ce jeu de barrières 52, 53 assure également la fonction de butée 54 lors du dégagement d'un rapport, comme illustré à la figure 5, qui sera décrit en détail dans la suite de la description.

Le fonctionnement de la commande interne de la boîte de vitesses ressort déjà de la description qui en a été faite ci-dessus et va être maintenant expliqué en relation avec les figures 1 à 5.

Ainsi, lors de la sélection d'un rapport, l'un ou les deux actionneurs reliés aux glissières 15, 16 sont activés par un calculateur, déplaçant longitudinalement la ou les glissières 15, 16 avec la ou les réglettes 25, 26 associées dans un sens ou un autre et suivant la distance désirée afin de mettre en coïncidence un des pions 17 à 20 d'une des glissières avec une nervure 10c à 13c d'une des bagues de guidage du doigt de passage.

Concomitamment, la clé de verrouillage 14 formée par les réglettes 25, 26 a été déplacée dans une position telle que leur barrière 52, 53 respective n'autorise le déplacement que du plot 10a à 13a, correspondant au doigt de passage 10 à 13 sélectionné, dans sa ligne de guidage transversale 51, lors de la rotation de l'axe de commande 5 activé par son actionneur, selon l'un quelconque des sens de rotation afin de réaliser l'engagement d'un rapport de vitesses par le déplacement de la crosse.

Le dégagement d'un rapport se fait en premier lieu par coulissement de la glissière et par conséquent de la réglette n'appartenant pas au pion de sélection 17 à 20 du rapport à désengager afin d'amener une barrière de verrouillage 52, 53 à l'extrémité opposée de la ligne de guidage transversale dans laquelle se trouve le plot du doigt de passage activé, puis rotation de l'axe de commande 5.

Une telle manoeuvre des réglettes 25, 26 permet avantageusement d'interdire une rotation inopinée du doigt de passage, entraîné par sa propre inertie, lors de la rotation inverse de l'axe de commande qui basculerait la fourchette du rapport à dégager vers le rapport de vitesse qui lui est associé, par la mise en place d'une butée, par exemple 54 comme visible à la figure 5.

En liaison avec la figure 5, illustrant les réglettes 25 et 26 en position point mort, on a représenté dans le tableau ci-dessous la portion de ces réglettes selon un déplacement vers la flèche F1 ou vers la flèche F2 permettant d'autoriser ou non la sélection d'un rapport de vitesses.

| | Point mort | Sélection 1-2 | Sélection 3-4 | Sélection 5-6 | Sélection Mar |
|---|---|---|---|---|---|
| Réglette 25 | Représentation Fig. 5 | Translation selon la flèche F1 | Retour position point mort | Translation selon la flèche F2 | Retour position Point mort |
| Réglette 26 | Représentation Fig. 5 | Position point mort | Translation selon la flèche F1 | Retour position point mort | Translation selon la flèche F2 |

On comprend à la lecture de la description ci-dessus que la commande interne de la boîte de vitesses pilotée selon la présente invention permet d'assurer un encombrement réduit de la commande elle-même ainsi qu'une rapidité dans l'exemple d'une architecture à six rapports et une qualité dans le passage des rapports par cette combinaison de réglettes et de glissières.

Bien que l'invention ait été décrite en liaison avec un mode de réalisation particulier elle comprend tous les équivalents techniques des moyens décrits.

## Revendications

1. Commande interne d'une boîte de vitesses pilotée pour déplacer alternativement plusieurs éléments d'engagement (1 à 4) de rapports juxtaposés, dans un carter de la boîte de vitesses, comportant un axe de commande (5) propre à tourner, sous l'action d'un actionneur dans des paliers (7, 8) agencés sur une platine support (9), cet axe de commande (5) porte au moins un doigt de passage (10 à 13) pour l'engagement d'un élément (1 à 4) et une pièce dite clé d'interverrouillage (14) destinée à immobiliser les autres éléments d'engagement lors du passage d'un rapport de vitesses, **caractérisée en ce que** l'axe de commande (5) porte également au moins une glissière de sélection (15, 16) comportant au moins un pion de sélection (17 à 20) de telle sorte qu'il est propre à être d'abord engagé sélectivement, par translation de la glissière (15, 16) longitudinalement sur l'axe de commande (5), dans l'une des ouvertures (21 à 24) agencées chacune dans l'un des doigts de passage (10 à 13) associé à un élément d'engagement (1 à 4), puis à entraîner ledit doigt de passage ainsi sélectionné, par rotation de l'axe (5), de manière à réaliser l'engagement d'un rapport, tandis que la clé d'interverrouillage (14) constituée d'au moins une réglette dite de verrouillage (25, 26) guidée en translation sur le support (9) de l'axe (5) de commande et solidaire de la glissière (15, 16) coopère concomitamment lors des déplacements de cette dernière avec un plot (10a à 13a) agencé sur chacun des doigts de passage (10 à 13) de manière à immobiliser en rotation les doigts de passage non sélectionnés et par voie de conséquence les autres éléments d'engagement.

2. Commande interne selon la revendication 1, **caractérisée en ce qu'**elle est pourvue de deux glissières de sélection, désignées première (15) et deuxième (16) glissière, portées par l'axe de commande (5) et propres à translater respectivement de manière sélective, par un actionneur, sur l'axe de commande (5).

3. Commande interne selon la revendication 2, **caractérisée en ce que** chacun des doigts de passage (10 à 13) est engagé dans l'un des éléments d'engagement (1 à 4) et est pourvu d'une bague de guidage (10b à 13b) montée libre en rotation sur l'axe de commande (5), les bagues étant juxtaposées les unes aux autres, et **en ce que** chaque bague (10b à 13b) présente une rainure transversale (21 à 24) afin d'assurer la mise en coopération, lors des déplacements de la ou des glissière(s) de sélection d'un pion de sélection (17 à 20) avec une nervure (10c à 13c) saillant de la rainure.

4. Commande interne selon la revendication 2, **caractérisée en ce que** chacune des glissières (15, 16) comporte au moins un pion agencé de manière qu'un doigt de passage (10 à 13) est apte à être sélectionné par un pion (17, 18) de la première glissière (15) alors qu'un doigt de passage adjacent est apte à être sélectionné par un pion (19, 20) porté par la deuxième glissière (16), préférentiellement chacune des glissières est pourvue de deux pions (17, 18 ; 19, 20).

5. Commande interne selon la revendication 3, **caractérisée en ce que** la clé d'interverrouillage (14) est constituée de deux réglettes (25, 26) guidées en translation sur les paliers (7, 8) du support (9) de l'axe (5), chaque réglette étant associée de manière symétrique à la glissière de sélection (15, 16) lui correspondant avec les mêmes doigts de passage (10 à 13) et étant pourvue, pour chacun de ces doigts (10 à 13), d'une ouverture présentant une ligne de guidage longitudinale (50) qui est prolongée à l'une de ses extrémités de part et d'autre d'une ligne de guidage transversale (51), à l'intérieur de laquelle est apte à se déplacer un plot (10a à 13a) saillant de la bague de guidage (10b à 13b) du doigt correspondant.

6. Commande interne selon la revendication 5, **caractérisée en ce que** chacune des réglettes (25, 26) est en outre pourvue d'un moyen d'obturation (52, 53) des lignes de guidage de l'autre réglette afin d'assurer une loi d'autorisation ou d'interdiction des déplacements des plots (10a à 13a) en fonction du rapport sélectionné et une butée (54) dans la ligne de guidage transversale (51) lors du dégagement d'un rapport.

7. Commande interne selon la revendication 6, **caractérisée en ce que** ce moyen d'obturation (52, 53) est constitué d'au moins une barrière saillant de la réglette et coopérant avec la surface extérieure de l'autre réglette.

8. Boîte de vitesses du type pilotée notamment pour véhicule automobile, comportant une commande interne de vitesses conforme à l'une quelconque des revendications 1 à 7.

## Patentansprüche

1. Interne Steuerung für ein automatisches Getriebe zum wechselweisen Verschieben mehrerer Einfügeelemente (1 bis 4) von nebeneinander liegenden Gängen in einem Getriebegehäuse, mit einer Steuerachse (5), die sich unter der Wirkung eines Betätigungsorgans in Lagern (7, 8) auf einer Tragplatte (9) drehen kann, wobei die Steuerachse (5) mindestens einen Durchgangsfinger (10 bis 13) zum Einfügen eines Elements (1 bis 4) und einen so genannten Zwischenverriegelungsschlüssel (14) trägt, der die anderen Einfügeelemente beim Einlegen eines Gangs blokkiert, **dadurch gekennzeichnet, dass** die Steuerachse (5) außerdem mindestens eine Auswahlschiene (15, 16) mit mindestens einem Auswahlstück (17 bis 20) trägt, das sich zunächst wahlweise durch Translation der Schiene (15, 16) längs der Steuerachse (5) in eine der Öffnungen (21 bis 24) einfügen lässt, die jeweils in einem der zu einem Einfügeelement (1 bis 4) gehörigen Durchgangsfinger (10 bis 13) vorgesehen sind, und dann den so ausgewählten Durchgangsfinger bei Drehung der Achse (5) mitnehmen kann, um einen Gang einzulegen, während der Zwischenverriegelungsschlüssel (14), bestehend aus mindestens einer so genannten Verriegelungsleiste (25, 26), die am Träger (9) der Steuerachse (5) translationsgeführt und mit der Schiene (15, 16) fest verbunden ist, begleitend zu deren Verschiebungen mit einem Klötzchen (10a bis 13a) an jedem der Durchgangsfinger (10 bis 13) zusammenwirkt, um die nicht ausgewählten Durchgangsfinger und damit die anderen Einfügeelemente am Drehen zu hindern.

2. Interne Steuerung nach Anspruch 1, **dadurch gekennzeichnet, dass** sie mit zwei Auswahlschienen versehen ist, einer ersten Schiene (15) und einer zweiten Schiene (16), die von der Steuerachse (5) getragen werden und wahlweise durch ein Betätigungsorgan an der Steuerachse (5) verschoben werden können.

3. Interne Steuerung nach Anspruch 2, **dadurch gekennzeichnet, dass** jeder der Durchgangsfinger (10 bis 13) in eines der Einfügeelemente (1 bis 4) eingefügt und mit einem Führungsring (10b bis 13b) versehen ist, der drehbeweglich an der Steuerachse montiert ist, wobei die Ringe nebeneinander liegen, und **dadurch**, dass jeder Ring (10b bis 13b) eine Quernut (21 bis 24) aufweist, sodass bei den Verschiebungen der Auswahlschiene(n) für das Zusammenwirken eines Auswahlstücks (17 bis 20) mit einer vorspringenden Rippe (10c bis 13c) der Nut gesorgt ist.

4. Interne Steuerung nach Anspruch 2, **dadurch gekennzeichnet, dass** jede der Schienen (15, 16) mindestens ein Stück aufweist, das so angeordnet ist, dass ein Durchgangsfinger (10 bis 13) durch ein Stück (17, 18) der ersten Schiene (15) ausgewählt werden kann, während ein angrenzender Durchgangsfinger durch ein von der zweiten Schiene (16) getragenes Stück (19, 20) ausgewählt werden kann, wobei jede der Schienen vorzugsweise mit zwei Stücken (17, 18; 19, 20) versehen ist.

5. Interne Steuerung nach Anspruch 3, **dadurch gekennzeichnet, dass** der Zwischenverriegelungsschlüssel (14) aus zwei Leisten (25, 26) besteht, die an den Lagern (7, 8) des Trägers (9) der Achse (5) translationsgeführt sind, wobei jede Leiste symmetrisch zu der ihr entsprechenden Auswahlschiene (15, 16) den gleichen Durchgangsfingern (10 bis 13) zugeordnet und für jeden dieser Finger (10 bis 13) mit einer Öffnung versehen ist, die eine Längsführungslinie (50) aufweist, welche an einem ihrer Enden auf beiden Seiten von einer Querführungslinie (51) fortgesetzt wird, innerhalb der sich ein vorspringendes Klötzchen (10a bis 13a) des Führungsrings (10b bis 13b) des entsprechenden Fingers bewegen kann.

6. Interne Steuerung nach Anspruch 5, **dadurch gekennzeichnet, dass** jede der Leisten (25, 26) darüber hinaus mit einem Mittel (52, 53) zum Verschließen der Führungslinien der anderen Leiste versehen ist, um für ein gesetzmäßiges Zulassen oder Verhindern von Verschiebungen der Klötzchen (10a bis 13a) abhängig vom gewählten Gang und einen Anschlag (54) in der Querführungslinie (51) beim Lösen eines Gangs zu sorgen.

7. Interne Steuerung nach Anspruch 6, **dadurch gekennzeichnet, dass** das Verschlussmittel (52, 53) aus mindestens einer Sperre besteht, die aus der Leiste vorspringt und mit der Außenfläche der anderen Leiste zusammenwirkt.

8. Automatisches Getriebe insbesondere für ein Kraftfahrzeug mit einer internen Getriebesteuerung nach einem der Ansprüche 1 bis 7.

## Claims

1. Internal control of a gearbox that is automated so as to displace alternately several juxtaposed ratio engagement elements (1 to 4), in a casing of the gearbox, comprising a control shaft (5) capable of turning, when actuated by an actuator, within bearings (7, 8) arranged on a support plate (9), this control shaft (5) carries at least one transition finger (10 to 13) for the engagement of an element (1 to 4) and a part known as an interlocking key (14) intended to immobilise the other engagement elements at the time of transition of a gear ratio, **characterised in that** the control shaft (5) also carries at least one selection slider (15, 16) comprising at least one selection pin (17 to 20) so that it is capable first of being engaged selectively, by translation of the slider (15, 16) longitudinally over the control shaft (5), in one of the openings (21 to 24) each arranged in one of the transition fingers (10 to 13) associated with an engagement element (1 to 4), then of driving said transition finger thus selected, by rotation of the axis (5), so as to engage a ratio, while the interlocking key (14) constituted by at least one strip known as a locking strip (25, 26), guided in translation over the support (9) of the control axis (5) and integral with the slider (15, 16) co-operates simultaneously, when the latter is displaced, with a stud (10a to 13a) arranged on each of the transition fingers (10 to 13) so as to immobilise in rotation the non-selected transition fingers and consequently the other engagement elements.

2. Internal control according to Claim 1, **characterised in that** it is provided with two selection sliders, denoted first (15) and second (16) slider, carried by the control shaft (5) and capable of translating respectively in a selective manner, using an actuator, over the control shaft (5).

3. Internal control according to Claim 2, **characterised in that** each of the transition fingers (10 to 13) is engaged in one of the engagement elements (1 to 4) and is provided with a guide ring (10b to 13b) mounted so as to be free in rotation on the control shaft (5), the rings being juxtaposed one against the other, and **in that** each ring (10b with 13b) has a transverse groove (21 to 24) in order to ensure that the selection slider(s) of a selection pin (17 to 20) are put into co-operation, during displacement thereof, with a rib (10c to 13c) projecting from the groove.

4. Internal control according to Claim 2, **characterised in that** each of the sliders (15, 16) comprises at least one pin arranged such that a transition finger (10 to 13) is capable of being selected by a pin (17, 18) of the first slider (15) while an adjacent transition finger is capable of being selected by a pin (19, 20) carried by the second slider (16), preferably each of the sliders is provided with two pins (17, 18; 19, 20).

5. Internal control according to Claim 3, **characterised in that** the interlocking key (14) is constituted by two strips (25, 26) guided in translation over the bearings (7, 8) of the support (9) of the axis (5), each strip being associated symmetrically with the selection slider (15, 16) corresponding thereto with the same transition fingers (10 to 13) and being provided, for each of these fingers (10 to 13), with an opening having a longitudinal guide line (50) that is extended, at one of its ends on either side, by a transverse guide line (51), inside which a stud (10a to 13a) projecting from the guide ring (10b to 13b) of the corresponding finger is capable of being displaced.

6. Internal control according to Claim 5, **characterised in that** each of the strips (25, 26) is also provided with a means (52, 53) for obturating the guide lines of the other strip in order to provide a rule whereby displacements of the studs (10a to 13a) are authorised or prohibited according to the selected ratio and a stop (54) in the transverse guide line (51) during disengagement of a ratio.

7. Internal control according to Claim 6, **characterised in that** this obturating means (52, 53) is constituted by at least one barrier projecting from the strip and co-operating with the outer surface of the other strip.

8. Gearbox of the automated type, particularly for a motor vehicle, comprising an internal gear control in accordance with any one of Claims 1 to 7.
